Europäisches Patentamt

European Patent Office

Office européen des brevets

(11) Publication number: **0 075 384**
**B1**

# EUROPEAN PATENT SPECIFICATION

(45) Date of publication of patent specification: **24.07.85**

(21) Application number: **82304123.1**

(22) Date of filing: **04.08.82**

(51) Int. Cl.⁴: **C 09 K 3/32**, C 02 F 1/68,
E 02 B 15/00

(54) **Oil spill absorbing peat.**

(30) Priority: **11.09.81 CA 385760**

(43) Date of publication of application:
**30.03.83 Bulletin 83/13**

(45) Publication of the grant of the patent:
**24.07.85 Bulletin 85/30**

(84) Designated Contracting States:
**AT DE FR GB IT NL SE**

(56) References cited:
**AT-B- 347 362**
**DE-A-1 814 871**
**DE-A-2 262 057**
**US-A-3 562 153**

(73) Proprietor: **TERRA-NOVA POWER AND
DEVELOPMENT LTD.**
**3 Military Road Suite 2**
**St. Johns Newfoundland A1C 2C3 (CA)**

(72) Inventor: **Moores, William D.**
**28 Hounsell Avenue Newtown**
**Mount Pearl Newfoundland A1N 2T3 (CA)**

(74) Representative: **Hartley, David et al**
**c/o Withers & Rogers 4 Dyer's Buildings**
**Holborn, London, EC1N 2JT (GB)**

Courier Press, Leamington Spa, England.

Description

The present invention relates to a process for treating peat to provide an oil-absorbing material useful for collecting oils floating on the surface of water or those dispersed in water as oil particles.

In recent years, more and more petroleum oil is produced from wells drilled in bodies of water, e.g., the Beaufort Sea, off the east coast of Canada, in the Labrador Sea, off the west coast of the U.S.A. in the Gulf of Mexico, off the west coat of Africa, off the west coast of South America, off the coast of Indonesia, off the coast of Vietnam and of China, etc. Each year also finds more and more oil shipped from one location to another by huge ocean-going tankers. Many safeguards and government regulations are provided in an effort to eliminate any loss of oil or spills on such bodies of water. However, despite all the precautions taken, oil is being spilled upon the seas and harbour areas. These oil spills are very undesirable, as it is well known that they can cause damage to wildlife and pollute beaches to the point where they cannot be used for recreational activities.

Due to the increased importance now being placed on preservation of the environment, even minor spills or contamination attract widespread attention and the resultant publicity involves damage to corporate public relations which often far outweigh actual damage to property or to the ecology. Moreover, oil-spill cleanup in remote ice infested waters, e.g., the Beaufort Sea and Labrador Sea, is prohibitively expensive and to a large extent, impractical. There are situations, however, in which deliberate neglect is unacceptable. Areas which are breeding or staging areas for migratory seabirds are a prime example. In such areas, oil should be removed from the sea surface regardless of cost. Unfortunately, most of the available countermeasures involve a trade-off between the various types of fauna. Such spills have heretofore proven to be extremely difficult to control and have resulted in widespread damage to property and to the ecology. Gradual hydrocarbon contamination of bodies of water can occur from discharge of oily wastes from industrial operations or from ships.

Considerable effort has been expended to try to find effective ways to combat these oil spills. For example, many mechanical oil skimmers and containment devices have been developed; various chemicals have been tried to coagulate the oil to aid in its recovery; and still other methods have been devised to attempt to sink the oil to the bottom of the body of water by spraying finely-divided clays or silicone-treated sand on the surface of the oil. The removal of oil from water can furthermore be accomplished by pumping if there is a sufficient thickness of oil in a given limited area, as when it is confined by a boom relatively shortly after the occurrence of a spill. Even so, however, a residue of oil always remains on the surface in the form of a thin film which continued pumping cannot remove. Frequently, there are also small spills on water where pumping is not feasible.

It has been proposed to eliminate oil films and layers floating upon bodies of water by virtue of the lower specific gravity of the oil by casting onto the oil-covered surface absorbent materials which draw the oil onto the absorbent and into the pores thereof. For this purpose, expanded perlite, hay, sawdust, natural peat, sand, kieselguhr, diatomaceous earth and the like materials lighter than water have been used. Plastic materials with high capacity have also been suggested for this purpose. Natural rubber latex granulates with good oil absorption characteristics have also been used. Mineral materials preferably made of hydrophobic and hydrophilic materials, for example, most vegetable fibers, e.g., cellulosic fibres, have also been used. Absorbent powdered materials of volcanic origin which have been rendered hydrophilic, to facilitate removal of oil pollutants from bodies of water, have also been used either alone or in combination with other commonly employed materials. Expanded polystyrene beads have also been used to absorb the undesired oil from various surfaces.

Cellular materials have also been used in which the oleophilic character is enhanced, by being exposed to a modifying agent which may be an emulsion, solution, vapor or particular form. Suitable modifying agents have been all kinds of bituminous materials, e.g., asphalt, coal tar pitch, and tall oil pitch, as well as waxes, metallic soaps, silicones, and other similar coatable, water-insoluble, oil-absorbing substances.

Expanded silicone-coated mineral perlite has been used in the past to remove an oily film from a body of water (see United States Patent No. 3,382,170 to Pape).

In United States Patent No. 3,464,920, assigned to Wacker-Chemie, it is proposed that oil spills be removed from a body of water by treating the spill with organic materials, e.g., sawdust, wood chips, coffee grounds and the like, which have been treated with an organic halosilane.

In United States Patent No. 3,536,615, assigned to Col-Mont Corporation, there is disclosed a product for removing oil slicks which is prepared by treating sawdust, wood chips, shavings, bark, cork and the like, with an adhesive to hold particles of carbon and other materials capable of absorbing oil.

In United States Patent No. 3,484,371, assigned to Deutsche Goldund Silber-Scheideanstalt, it is proposed that oil pollutants be removed from the surface of a body of water by spreading hydrophobized spray dried hollow water glass particles thereover. The thin-walled hollow spherical particles are rendered hydrophobic by treatment with vapors of organic halo silanes.

DE 2262057 describes the production of oil absorbing peat material in which the peat fibre is separated from the peat fines of the peat has been dried by purely mechanical means to a moisture content of less than 75%. The fibres and fines are then dried separately to a moisture content of 8—10% and subsequently mixed together again. It is stated that unless the fibres and fines are treated separately, the two components will exhibit different moisture contents.

Purely mechanical recovery systems are difficult to establish and maintain owing to the normally large area of leakage and the constant wave action in such area.

With respect to the use of absorbents, the capacity of many such materials to absorb oil is comparatively weak. Other such materials absorb water and, having become sufficiently wet, they will sink in water entraining some oil and leaving some oil to float as oil slicks. Many other of these materials are unsuitable for the selective removal of oil films from bodies of water.

Many of the naturally-occurring materials are generally insufficiently preferentially oil-wetted to permit maximum oil absorption before sinking down in the water below the oil pollutants. Highly absorbent latex granulates, on the other hand, tend to drift to the center of the oil spill rendering confinement of the spill difficult and subsequent separation of the oil from the latex virtually impossible. With respect to the use of a microporous substance in finely-divided form, the capillary attraction of these particles is for water as well as for the oil substances so that a large part of the absorptive capacity of the particles is consumed by saturation of water and is unavailable for pick-up of the oil. Other absorbents have a tendency to re-release sequestered oil. In some materials which absorb water, the absorption of the water would tend to dislocate any air entrapped in the cellulosic fibres, causing the fibres to sink. Powders are unsuitable because of the unfavourable spreading properties of powders due to their tendency to dust, the tendency of the dust to sink under the surface of the water after oil has been absorbed and the tendency of the agglomerated material to leak oil during removal. Foamed polystyrene, on the other hand, has been particularly slow in absorbing oil. Also, these polymeric foam and polymeric hydrocarbon sorbents, when placed into an oil spill on water, penetrate the oil/water interface and begin, at those portions of their surfaces located below the oil level, to absorb water.

The oil-absorbing materials of the synthetic fibres melt during combustion, and it is difficult to burn them off. Furthermore, they produce black smoke or hazardous substances during combustion, and therefore, a special combustion furnace or special equipment for the removal of the hazardous substances is required.

According to the present invention, we propose a process of treating peat to provide oil-absorbing materials which are useful for collecting oil floating on the surface of water or those dispersed in water as oil particles characterized by the following steps; preparing an initial mixture by mixing peat with an alkaline earth metal basic material; partially drying said initial mixture during a first stage by heating said initial mixture for a predetermined period of time; preparing a further mixture by mixing additional said basic material with said partially dried peat; and further heating said further mixture during a second stage until said peat has the desired moisture content.

The oil absorbing material produced by the process of this invention is better for the purpose of scavenging oil contaminants from water than those proposed heretofore. It has improved rates and quantities of oil absorption when contacted with oil-contaminated water.

In preferred embodiments of the process of this invention:

1) the alkaline earth basic material is magnesium/calcium hydroxide lime substitute material;

2) the magnesium/calcium hydroxide lime substitute contains about 10% Mg and about 20% Ca to provide a $CaCO_3$ lime equivalent of about 95%;

3) the peat initially has a humidification factor of 2—4, preferably of 3, on the Van Post scale, and has a moisture content of about 60%—80% by weight, preferably of about 70%;

4) the initial mixture is heated, during the first stage, to a maximum temperature of about 150°C for a period of about 10 minutes;

5) the initial mixture is heated, during the first stage, until the peak has a moisture content of about 25%—35% by weight, preferably about 30%;

6) the further mixture is heated during the second stage for a sufficient period of time at a sufficient temperature to provide a peat of a moisture content of about 5—10% by weight;

7) and the time of the second heating is about 10 minutes;

8) the ratio of peat/basic material in the initial mixture is about 1:15 to about 1:45, preferably about 1:30; and

9) the ratio of peat/basic material in the further mixture is about 1:10 to about 1:20, preferably about 1:15.

It is known that peat has outstanding absorbency qualities, since in its natural state is has absorbed approximately 90% water. It has now been found, however, that on drying peat to approximately 5—10% moisture content in the manner described above, such peat can absorb other liquid materials, e.g., oil.

Peat is composed of wood fibres, which are encompassed in a sheath of water, referred to as a colloid, or as the colloidal content of the peat. On contact with some fluids, chemical attractive bonding, or breakage, of bonds within this colloidal content, takes place to permit selective absorption of that fluid. Oil is one such fluid for which this concept of selective absorption occurs.

It is believed that the peat, when coming in contact with the oil, will more readily absorb the oil than it will attempt to retain the water of its colloidal sheath. This is believed to be due to the strong chemical attractive forces between the molecules of the peat and those of the oil. These forces, so powerful as to overcome the forces between the peat and water molecules, causes the destruction of those bonds and the formation of new bonds between the oil and the peat. It is for this reason that such dried peat will absorb up to 20 times its own weight in oil, rather than absorbing, or retaining water. This, and the fact that the hereinabove defined dried peat has a stronger affinity to oil than the straw which is now being used (which can absorb only 4—5 times its own weight) demonstrates its amazing suitability for oil spill pollution control. The peat is also a benign absorbent and can also be used to absorb oil spills on land. This is because the dried peat is sterile and organically compatible.

An embodiments of the present invention will now be described with reference to specific example and with reference to the accompanying drawings in which:

Figure 1 shows, schematically, the first stage in the oil spill pollution control;

Figure 2 shows, schematically, an intermediate stage in the oil spill pollution control; and

Figure 3 shows, schematically, the final stage in the oil spill pollution control.

The following are two typical examples of a process for treating peat to provide an oil absorbing material in accordance with the invention.

### Example 1

About 57 g of a commercially available magnesium/calcium hydroxide lime substitute (10% Mg, 20% Ca to give a 95% $CaCO_3$ lime equivalent) was mixed with approximately 2.3 kg of peat of a humidification factor of three on the Van Post scale, and a moisture content of about 70%. This mixture was then heated in an oven at about 150°C for ten minutes, after which time it was removed. The peat then had a moisture content of about 30%. An additional approximately 115 g of the lime substitute was added to this mixture of partially dried peat and again thoroughly mixed. It was then heated again in the oven for about 10 minutes at about 150°C until the peat had a moisture content of about 5%—10%. The peat was then pulverized to a dry powder.

### Example II

In another example, about 2—2.5 kg of the peat/lime substitute mixtures were heated in an oven for about 8—10 minutes at about 150°C after which they were loosened and heated in the oven for a further period of about 3—7 minutes.

The oven used herein may be a direct heat oven, a convection oven, a hot air oven or a microwave oven.

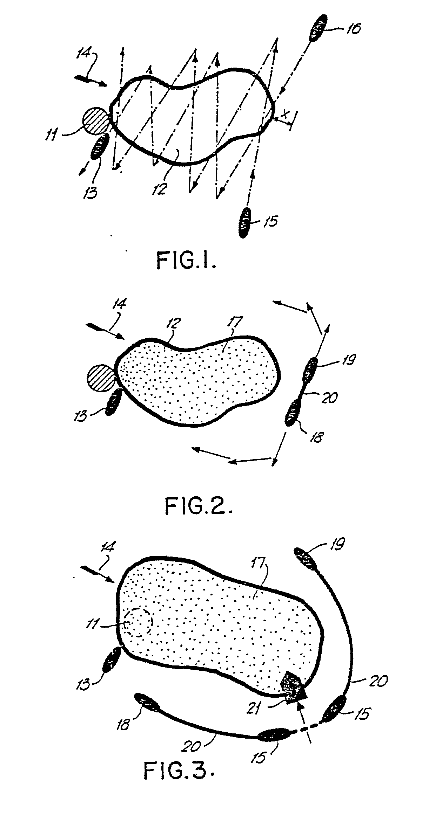

As seen in Figure 1, oil spill source 11 spews out oil to form an oil slick 12. A first boat 13 is stationed in the immediate area of the oil spill source 11. This first boat 13, said to be "on station", moves in lines parallel to the downwind direction of the wind (shown by arrow 14) in the immediate area of the spill. While doing so, this vessel disperses the peat product as described above over the oil as it spews from the spill source 11.

A second boat 15 and a third boat 16 approach the spill, and begin the spraying of the above-described peat, from a variable distance from the edge of the spill, shown here as "X". This distance, "X", depends on wind speed and direction. Travelling, again in a direction parallel to the down-wind of the wind (as shown in the broken lines), these vessels 15 and 16 move, in a criss-crossing pattern, within the oil spill 12, at all times dispersing the above-described peat from nozzles (not shown) mounted on the forward deck and on the stern of the ships.

Figure 2 shows the oil spill 12 now three-quarters blanketed with the peat 17, spread by boats 15 and 16 (not shown). Boat 13 remains on station at the site 11 of the oil spill at all times during clean up. Boats 15 and 16 terminate the spraying of the peat, and boats 18 and 19 commence the spreading of a containment collar 20 which serves to fix the oil spill 12 to approximately initial location.

As seen in Figure 3, the oil spill 12 and the oil spill source 11 are now completely covered with the peat 17. The oil spill 12, in addition to being covered with the peat 17, is now partially surrounded by the collar 20 that has been spread by boats 18 and 19. Boats 15 and 16, which had dispersed the peat 17 over the oil spill 12, now detach the collar 20 at some point, to permit the entrance of a so-called Mechanized Oil Recovery Tender (M.O.R.T.) 21, to the peat-covered oil spill. This M.O.R.T. vessel is equipped to collect or skim the peat/oil combination from the surface, so as to recover as much of the spilled oil as possible. Boats 15 and 16, after reconnecting the collar 20, thus sealing the entrance opening, will then move to stations (not shown) along the outer edges of the collar, further to aid its stability.

The boats referred to above should be high speed patrol boats. These boats should be equipped with pressure compacted, specially processed peat of this invention, the peat having the oil-absorbency percentage previously mentioned. High pressure air cannons, similar to those used for cellulose home insulation, installation equipment, should be mounted on the forward deck and on the stern of these boats, enabling the spraying of this peat over the oil spill.

The effective dispersion of the peat and the coverage of the oil spill depend on several factors, e.g., wind speed, wind direction, and the potential size and shape of the oil slick. In accordance with this, the elevation of the cannon nozzles, and the speed of those patrol boats must be adjusted. The most effective method of oil slick containment would be by utilizing boats of this type, travelling in the down-wind direction to the wind. These boats would repeatedly move across the oil spill, in parallel lines to the down-wind direction, until the peat is satisfactorily covering all of the polluted area, thus controlling it. Further containment will be provided by the specialized collar that will be deployed to enclose the sprayed area.

### Claims

1. A process for treating peat to provide an oil-absorbing material which is useful for collecting oil floating on the surface of water or dispersed in water as oil particles characterised by preparing an initial mixture by mixing peat with an alkaline earth metal basic material; heating the mixture at a maximum temperature of about 150°C for a maximum period of time of 15 minutes; preparing a further mixture by mixing additional said basic material with said partially dried peat; further heating the further mixture to a maximum temperature of 150°C for a maximum period of time of 15 minutes, until the peat has the desired moisture content of about 5% to 10%; and finally pulverising the dried product to a fine dry powder.

2. A process according to claim 1 characterised in that the alkaline earth basic material is magnesium/calcium hydroxide lime substitute material.

3. A process according to claim 2 characterised in that the magnesium/calcium hydroxide lime substitute contains about 10% Mg and about 20% Ca to provide a $CaCO_3$ lime equivalent of about 95%.

4. A process according to any one of claims 1 to 3 characterised in that the peat initially has a humidification factor of 2—4, preferably of 3, on the Van Post scale, and has a moisture content of about 60%—80% by weight, preferably of about 70%.

5. A process according to any one of claims 1 to 4, characterised in that the initial mixture is heated, during the first stage, for a time of about 10 minutes.

6. A process according to any one of claims 1 to 5 characterised in that the initial mixture is heated, during the first stage, until the peat has a moisture content of about 25%—35% by weight, preferably about 30%.

7. A process according to any one of claims 1 to 6 characterised in that the time of the second heating is about 10 minutes.

8. A process according to any one of claims 1 to 7 characterised in that the ratio of peat/basic material in the initial mixture is about 1:15 to about 1:45, preferably about 1:30.

9. A process according to any one of claims 1 to 8 characterised in that the ratio of peat/basic material in the further mixture is about 1:0 to about 1:20, preferably about 1:15.

## Patentansprüche

1. Verfahren zur Torfbehandlung für das Schaffen eines ölabsorbierenden Materials, das für das Sammeln von Öl nützlich ist, das auf der Wasseroberfläche schwimmt oder in dem Wasser als Ölpartikel verteilt ist, gekennzeichnet durch, Zubereiten einer Ausgangsmischung durch Mischen von Torf mit einem Erdalkalimetall-Grundmaterial;

Erhitzen der Mischung bei einer maximalen Temperatur von etwa 150°C während einer maximalen Zeitdauer von 15 Minuten;

Zubereiten einer weiteren Mischung durch zusätzliches Mischen des Grundmaterials mit dem teilweise getrockneten Torf;

weiteres Erhitzen der weiteren Mischung auf eine maximale Temperatur von 150°C während einer maximalen Zeitdauer von 15 Minuten, bis der Torf den gewünschten Feuchtigkeitsgehalt von etwa 5 bis 10% besitzt; und

schließlich Pulverisieren des getrockneten Produktes zu einem feinen trockenen Pulver.

2. Verfahren nach Anspruch 1, dadurch gekennzeichnet, daß das Erdalkalimetall-Grundmaterial Magnesium/Calciumhydroxid-Kalkersatz-Material ist.

3. Verfahren nach Anspruch 2, dadurch gekennzeichnet, daß der Magnesium/Calciumhydroxid-Kalkersatz etwa 10% Mg und etwa 20% Ca enthält, um ein $CaCO_3$-Kalkequivalent von etwa 95% vorzusehen.

4. Verfahren nach einem der Ansprüche 1 bis 3, dadurch gekennzeichnet, daß der Torf anfangs einen Feuchtigkeitsfaktor von 2 bis 4, vorzugsweise von 3, auf der Van Post-Skala aufweist und einen Feuchtigkeitsgehalt von etwa 60 bis 80 Gew.%, vorzugsweise von 70 Gew.% besitzt.

5. Verfahren nach einem der Ansprüche 1 bis 4, dadurch gekennzeichnet, daß die Ausgangsmischung während der ersten Verfahrensstufe über eine Zeit von etwa 10 Minuten erhitzt wird.

6. Verfahren nach einem der Ansprüche 1 bis 5, dadurch gekennzeichnet, daß die Ausgangsmischung während der ersten Verfahrensstufe erhitzt wird, bis der Torf einen Feuchtigkeitsgehalt von etwa 25 bis 35 Gew.%, vorzugsweise etwa 30 Gew.%, aufweist.

7. Verfahren nach einem der Ansprüche 1 bis 6, dadurch gekennzeichnet, daß die Zeit des zweiten Erhitzens etwa 10 Minuten beträgt.

8. Verfahren nach einem der Ansprüche 1 bis 7, dadurch gekennzeichnet, daß das Verhältnis von Torf zu Grundmaterial bei der Ausgangsmischung 1:15 bis etwa 1:45, vorzugsweise etwa 1:30 beträgt.

9. Verfahren nach einem der Ansprüche 1 bis 8, dadurch gekennzeichnet, daß das Verhältnis Torf/Grundmaterial bei der weiteren Mischung etwa 1:10 bis etwa 1:20, vorzugsweise etwa 1:15, beträgt.

## Revendications

1. Procédé pour traiter de la tourbe de manière à obtenir un matériau d'absorption d'huile, utilisable pour collecter de l'huile flottant à la surface de l'eau ou dispersée dans l'eau sous forme de particules d'huile, procédé caractérisé en ce qu'il consiste à préparer un mélange initial en mélangeant de la tourbe à un matériau à base de terre de métal alcalin; à chauffer le mélange à une température maximum d'environ 150°C pendant une période de temps maximum de 15 minutes; à préparer un autre mélange en mélangeant un supplément de ce matériau de base à la tourbe partiellement séchée; à chauffer encore ce nouveau mélange à une température maximum de 150°C pendant une période de temps maximum de 15 minutes, jusqu'à ce que la tourbe atteigne la teneur en humidité voulue, de l'ordre de 5 % à 10 %; et à pulvériser enfin le produit séché en une poudre fine sèche.

2. Procédé selon la revendication 1, caractérisé en ce que le matériau à base de terre alcaline est un produit de substitution d'hydroxyde de magnésium/calcium (chaux).

3. Procédé selon la revendication 2, caractérisé en ce que le produit de substitution d'hydroxyde de magnésium/calcium contient environ 10 % de Mg et 20 % de Ca pour donner un équivalent de chaux $CaCo_3$ à environ 95 %.

4. Procédé selon l'une quelconque des revendications 1 à 3, caractérisé en ce que la tourbe présente un facteur d'humidification compris entre 2 et 4, et de préférence de 3, sur l'échelle de Van Post, et une teneur en humidité d'environ 60 % à 80 % en poids, et de préférence d'environ 70 %.

5. Procédé selon l'une quelconque des revendications 1 à 4, caractérisé en ce que le mélange initial est chauffé, au cours de la première étape, pendant une durée d'environ 10 minutes.

6. Procédé selon l'une quelconque des revendications 1 à 5, caractérisé en ce que le mélange initial est chauffé, au cours de la première étape, jusqu'à ce que la tourbe présente une teneur en humidité d'environ 25 % à 35 % en poids, et de préférence d'environ 30 %.

7. Procédé selon l'une quelconque des revendications 1 à 6, caractérisé en ce que la durée de la seconde étape de chauffage est d'environ 10 minutes.

8. Procédé selon l'une quelconque des revendications 1 à 7, caractérisé en ce que le rapport de la tourbe au matériau de base, dans le mélange initial, est d'environ 1:15 à 1:45, et de préférence de l'ordre de 1:30.

9. Procédé selon l'une quelconque des revendications 1 à 8, caractérisé en ce que le rapport de la tourbe au matériau de base, dans le mélange ultérieur, est d'environ 1:0 à 1:20, et de préférence de l'ordre de 1:15.

FIG.1.

FIG.2.

FIG.3.